# EUROPEAN PATENT APPLICATION

(11) **EP 4 570 491 A1**
(43) Date of publication of application: **18.06.2025**
(21) Application number: 23220332.3
(22) Date of filing: 27.12.2023
(51) Int. Cl.: B32B 9/02, B32B 9/04, B32B 27/08, B32B 27/30, B65D 65/38, C09D 133/00, C09D 189/00, C08J 5/18, D21H 17/22, D21H 17/30, D21H 17/31, D21H 17/37, D21H 19/50, D21H 21/16, D21H 27/10, D21H 19/22

(54) **FOOD PACKAGING INCLUDING BARRIER FILM**

(30) Priority: 15.12.2023 KR 20230182867
(71) Applicant: Everchemtech Co., Ltd, Hwaseong-si, Gyeonggi-do 18543 (KR)
(72) Inventor: CHO, So Hyeon, Suwon-si, Gyeonggi-do (KR); PARK, Ye Ji, Suwon-si, Gyeonggi-do (KR)
(74) Representative: von Hirschhausen, Helge

(57) **Abstract**

The present disclosure may provide a food package material comprising a substrate layer, a primer layer disposed on the substrate layer, a barrier layer disposed on the primer layer, and a sealant layer disposed on the barrier layer.

## Description

### CROSS REFERENCE TO RELATED APPLICATION

This application claims priority to Korea Patent Application No. 10-2023-0182867 filed on December 15, 2023, which is hereby incorporated by reference in its entirety.

### BACKGROUND

### Field of Technology

The present disclosure relates to a food package material comprising a barrier layer. More specifically, it relates to a food package material comprising a substrate layer, a primer layer, a barrier layer, and a sealant layer, wherein every layer is water-soluble, so that the food package material is environment-friendly and renewable.

### Related Technology

In modern society, various foods package materials are widely used for packaging retort foods, packed lunches, instant noodles, instant rice, etc. In addition, modern people have increased concerns about the environment and health. Following such trends, research on food package materials using natural substances is being conducted and, in addition to this, developments of films to prevent moisture or oxygen for maintaining freshness of foods are being actively pursued.

In this regard, reference 1 discloses a food package material comprising a substrate layer, an oxygen barrier film, an adhesive layer, and a polymer layer, in which the oxygen barrier film has an excellent oxygen barrier property.

However, papers, which are commonly used for a substrate layer, have problems in that it has difficulty in a water-based coating due to low water resistance and low smoothness, it has difficulty in blocking oxygen due to pores present in papers, and the freshness of foods is not well maintained when using such a material for a food package due to the lack of the moisture blocking property or sealing property. For this reason, demands for food package materials, having an excellent adhesion to a substrate layer, excellent moisture as well as oxygen barrier properties, and an excellent sealing property, are still present.

The discussions in this section are only to provide background information and do not constitute an admission of prior art.

### Documents of Prior Arts

### Patent Document

Reference 1: Korean Patent Publication No. KR 10-2335893 (2021.12.07)

### SUMMARY

In order to solve problems of conventional arts, the present disclosure is to provide a food package material comprising a substrate layer, a primer layer, a barrier layer, and a sealant layer, wherein every layer is water-soluble so that the food package material is environment-friendly and renewable. More particularly, the present disclosure is to provide a package paper for packaging foods.

To this end, the present disclosure may provide a food package material comprising a substrate layer, a primer layer disposed on the substrate layer, a barrier layer disposed on the primer layer, and a sealant layer disposed on the barrier layer.

The barrier layer may be formed of a coating composition comprising a solvent, an alkali additive, a natural substance, a filling agent, and a viscosity agent.

The viscosity agent may comprise at least one selected from a group consisting of bentonite, guar gum, xanthan gum, alginate, locust bean gum, and cellulose nano fiber.

The viscosity agent may be included in an amount of 0.1 to 1 parts by weight with respect to 100 parts by weight of solids of the coating composition.

The primer layer may be formed of a coating composition comprising one or more olefins with C3 to C30, one or more olefins with C3 to C30 and a crosslinking agent, or one or more olefins with C3 to C30 and an inorganic filling agent.

The sealant layer may be formed of a coating composition comprising one or more olefins with C3 to C30, one or more olefins with C3 to C30 and a slip agent, or one or more olefins with C3 to C30 and an inorganic filling agent.

The olefins may be included in an amount of 10 to 40 parts by weight with respect to 100 parts by weight of a binder of the coating composition.

The inorganic filling agent may comprise at least one selected from a group consisting of silica gel, calcium carbonate, titanium oxide, montmorillonite, and talc.

The crosslinking agent may comprise an isocyanate-based crosslinking agent, an aziridine-based crosslinking agent, a melamine-based crosslinking agent, a carbodiimide-based crosslinking agent, or a reactive vinyl-based crosslinking agent.

The slip agent may comprise at least one selected from a group consisting of a carnauba wax emulsion, an ozokerite emulsion, a paraffin wax emulsion, a polyethylene wax emulsion, an oxidized wax emulsion, a silicon emulsion, aliphatic alcohol, a stearic acid monomer, and stearic acid.

Since a food package material according to the present disclosure comprises a primer layer having improved water resistance and smoothness, it has an excellent adhesion between a substrate layer and a barrier layer, has an excellent oxygen barrier property, an excellent hydrogen property, an excellent sealing property because of a barrier layer and a sealing layer, and has a high food storage stability. For this reason, it is easy to handle. In addition, since every layer of the food package material according to the present disclosure is water soluble, this food package material is environment-friendly and renewable.

### BRIEF DESCRIPTION OF THE DRAWINGS

In order that the disclosure may be well understood, there will now be described various forms thereof, given by way of example, reference being made to the accompanying drawings, in which:

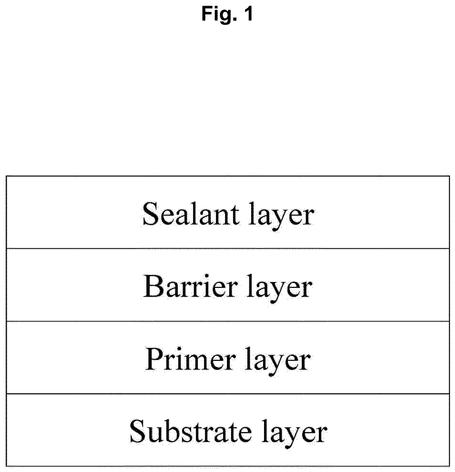

FIG. 1 shows a schematic diagram of a food package material according to the present disclosure.

### DETAILED DESCRIPTION OF EMBODIMENTS

It should be noted that technological terms used in this specification are used only for describing specific embodiments, not for limiting the present disclosure. In addition, all the technological terms used in this specification have meanings that can be commonly understood by persons with ordinary skill in the art to which the present disclosure pertains. The terms shall not be excessively comprehensively or excessively restrictively interpreted as far as they are not clearly and particularly defined as such. Further, if technological terms used in this specification are incorrect so that they cannot clearly describe the idea of the present disclosure, they should be understood as other technological terms replacing them, with which a person skilled in the art would correctly understand the idea.

In addition, common terms used in this specification should be interpreted as defined in dictionaries or based on the context. They should not be excessively restrictively interpreted.

In this specification, a term in a singular form may also mean a term in a plural form as long as there is no particular indication. In addition, it should be noted that, when describing that a certain part 'comprises' or 'includes' certain components or certain steps, this does not mean that this certain part must comprise or include these certain components or steps, but this means that this certain part may not comprise or include some components or steps or further comprise or include other components or steps.

Hereinafter, the present disclosure will be described in more detail with reference to embodiments. However, the present disclosure is not limited thereto.

The present disclosure may provide a food package material, specifically, a package paper for packaging foods comprising a substrate layer, a primer layer disposed on the substrate layer, a barrier layer disposed on the primer layer, and a sealant layer disposed on the barrier layer.

Conventionally, a food package material does not include a barrier layer or a barrier layer is disposed right on a substrate layer. When there is no barrier layer, it is difficult to block oxygen and, when a barrier layer is disposed right on a substrate layer, a coating composition forming the barrier layer all permeates the substrate layer due to insufficient water resistance and smoothness of the substrate layer. Since the barrier layer is not properly formed, the barrier property cannot be achieved. For this reason, even when there is a barrier layer, the moisture blocking property or the sealing property cannot be easily secured.

Therefore, the present disclosure provides an improved adhesion between a substrate layer and a barrier layer by placing a primer layer having improved water resistance and smoothness on the substrate layer. In addition, by additionally placing a sealant layer on the barrier layer, the moisture blocking property and the sealing property in addition to the oxygen barrier property are secured. In particular, the substrate layer, the primer layer, the barrier layer, and the sealant layer are water soluble, which means that they are environment friendly and recyclable. FIG. 1 shows a schematic diagram of a food package material according to the present disclosure.

The substrate layer is made of glassine paper. The glassine paper may be white, yellow, or brown depending on whether to be bleached and the degree of bleaching. The basis weight of the substrate layer may be 30 to 100g/m². If the substrate layer has a basis weight out of such a range, the usability and convenience thereof as a food package material may decrease.

The barrier layer may be formed of a coating composition comprising a solvent, an alkali additive, a natural substance, a filling agent, and a viscosity agent. Since almost foods are organic matters, they are vulnerable to moisture, oxygen, or other gases. The barrier layer has a property of blocking moisture, oxygen, carbonic acid gases, nitrogen, ultraviolet rays, etc..

In order to form a barrier layer to give a blocking property to a substrate layer, an excessive amount of a coating composition needs to be used. When the viscosity of the coating composition is low, the coating composition would easily flow down so that it is difficult to achieve a uniform coating thickness and this leads to a non-uniform coating. In other words, a barrier layer of a uniform thickness cannot be achieved. For this reason, the viscosity of the coating composition needs to be increased for forming a barrier layer. Since a coating composition based on natural substances would gelate if the concentration thereof is increased, a viscosity agent is used.

The viscosity agent increases the viscosity of a coating composition by increasing volumes of natural substances through bonds of hydrogen with surrounding water molecules. This maximizes the oxygen and moisture blocking effect of a barrier layer. In addition, a high viscosity of a coating composition may provide an excellent appearance in coating.

The viscosity agent may comprise at least one selected from a group consisting of bentonite, guar gum, xanthan gum, alginate, locust bean gum, and cellulose nano fiber. In particular, when alginate or xanthan gum is used as a viscosity agent, a thickening effect may last long and an excellent appearance of coating without any reliefs may be achieved.

The viscosity agent may be included in an amount of 0.1 to 1 parts by weight with respect to 100 parts by weight of solids of the coating composition. When the viscosity agent is included in an amount of less than 0.1 part by weight, there could be no thickening effect so that the barrier properties would decrease and, when the viscosity agent is included in an amount of more than 1 part by weight, it could be difficult to maintain the viscosity or the appearance of coating may be deteriorated due to noticeable particles.

As the natural substance, a protein is used. The protein, in a form of a polymer to which amino acids are combined, comprises a carboxyl group (-COOH) and an amine group (-NH₂) respectively at ends of molecular chains and multiple peptide bonds (-O=C-NH-) between the chains so as to have excellent oxygen barrier properties. For example, whey protein isolate (WPI), whey protein concentrate (WPC), soy protein isolate (SPI), rice protein isolate (RPI), oat protein isolate (OPI), pea protein isolate (PPI), casein, sodium caseinate, corn zein, gelatin, gluten, dextrin, carrageenan, and cellulose may be used.

The alkali additive is used for blocking hydrogen bonds between carboxyl groups and ketone groups included in a protein structure of a natural substance. For example, an inorganic alkali compound comprising potassium hydroxide (KOH), sodium hydroxide (NaOH), calcium hydroxide (Ca(OH)₂), sodium carbonate (Na₂CO₃), or the like or an organic alkali compound comprising a primary amine, a secondary amine, a tertiary amine, or the like may be used.

The filling agent fills gaps of a network structure formed by protein chains of a natural substance by being placed in the gaps so as to increase the barrier properties and to smoothen the surface. For example, sorbitol, fructose, sucrose, mannitol, propylene glycol, glycerol, polyethylene glycol (PEG200, PEG400, PEG600, etc.) may be used.

As the solvent, it is preferable to use distilled water or purified water.

The primer layer, which is an acrylic primer, may comprise a coating composition comprising one or more olefins with C3 to C30, one or more olefins with C3 to C30 and a crosslinking agent, or one or more olefins with C3 to C30 and an inorganic filling agent.

The sealant layer, which is an acrylic sealant, may comprise a coating composition comprising one or more olefins with C3 to C30, one or more olefins with C3 to C30 and a slip agent, or one or more olefins with C3 to C30 and an inorganic filling agent.

The coating composition of the primer layer or the sealant layer is water-based and may comprise 30 to 50 parts by weight of a binder with respect to 100 parts by weight of the coating composition. The binder may comprise (meta)acrylic resin, which may be, for example, polyethyl(meta)acrylate, polypropyl-(meta)acrylate, polyisopropyl(meta)acrylate, polybutyl(meta)acrylate, polyhexyl(meta)acrylate, polyethylhexyl(meta)acrylate, polylauryl(meta)acrylate, or the like.

Generally, when the content of a soft segment is increased in polymerization of an acrylic polymer, the formation of a film and water resistance are improved and, when the content of a hard segment is increased, minute cracks occur on a film, however, the thermal resistance and durability are improved.

By adjusting the contents of a soft segment and a hard segment, the coating compositions of the primer layer and the sealant layer may have properties required for the respective layers. For example, if the coating composition comprises one or more olefins with C3 to C30, the soft segment increases in the polymerization. This would be advantageous for forming the primer layer and the sealant layer and provide excellent water resistance.

The olefins may be included in an amount of 10 to 40 parts by weight with respect to 100 parts by weight of a binder in the coating composition of the primer layer or the sealant layer. When the olefins are included in an amount of less than 10 parts by weight, the formation of a film is not easy and the thermal resistance is high, which leads to a difficulty in securing an appropriate sealing initiation temperature. When the olefins are included in an amount of more than 40 parts by weight, a tack may be generated during film formation due to a low thermal resistance.

The coating composition of the primer layer may comprise one or more olefins with C3 to C30 and a crosslinking agent or an inorganic filling agent for securing a thermal resistance. When the coating composition comprises a crosslinking agent or an inorganic filling agent, all the properties such as the thermal resistance, water resistance, film formability, or the like will be suitable for a primer layer in comparison with a case when a hard segment is increased by comprising polymethylmethacrilate (PMMA).

The coating composition of the sealant layer may comprise one or more olefins with C3 to C30 and a slip agent or an inorganic filling agent for securing an appropriate sealing initiation temperature, a sealing strength, and a moisture blocking property. When the coating composition comprises a slip agent or an inorganic filling agent, the thermal resistance is high, which leads to a high sealing initiation temperature, and an appropriate sealing strength may be secured in comparison with a case when a hard segment is increased by comprising polymethylmethacrilate (PMMA).

The inorganic filling agent may comprise at least one selected from a group consisting of silica gel, calcium carbonate, titanium oxide, montmorillonite, and talc. The inorganic filling agent may be included in an amount of 1 to 5 parts by weight with respect to 100 parts by weight of a binder in the coating composition. When the inorganic filling agent is included in an amount of less than 1 part by weight, the moisture blocking property may be insufficient and, when it is included in an amount of more than 5 parts by weight, the sealing strength may decrease.

The crosslinking agent may comprise an isocyanate-based crosslinking agent, an aziridine-based crosslinking agent, a melamine-based crosslinking agent, a carbodiimide-based crosslinking agent, or a reactive vinyl-based crosslinking agent. The crosslinking agent may be included in an amount of 1 to 5 parts by weight with respect to 100 parts by weight of a binder in the coating composition. When the crosslinking agent is included in an amount of less than 1 part by weight, the crosslinking may be insufficient, which leads to a failure of an improvement of the thermal resistance and, when it is included in an amount of more than 5 parts by weight, the composition may gelate.

For example, an isocyanate-based crosslinking agent refers to a compound (polyisocyanate compound) comprising two or more isocyanate groups, which may be, for example, an aromatic polyisocyanate compound, such as xylylenediisocyanate (XDI), diphenylmethanediisocyanate, triphenylmethanetriisocyanate, and trilenediisocyanate (TDI); hexamethylenediisocyanate (HMDI); pentamethylenediisocyanate (PDI); isophoronediisocyanate; or the like.

In addition, for example, a reactive vinyl-based crosslinking agent is a crosslinking agent having 2 to 4 reactive groups that can react with olefins, which may be trimethylolpropane, trimethacrylate, trimethylolpropane triacrylate, triallyltrimesate, triallylphosphate, pentaerythritol triacrylate, divinylbenzene, or the like.

The slip agent, which is added to improve a tack on a surface of a coating, removes all the problems occurring due to a high friction coefficient of a surface.

The slip agent may comprise at least one selected from a group consisting of a carnauba wax emulsion, an ozokerite emulsion, a paraffin wax emulsion, a polyethylene wax emulsion, an oxidized wax emulsion, a silicon emulsion, aliphatic alcohol, a stearic acid monomer, and stearic acid.

The slip agent may be included in an amount of 0.1 to 3 parts by weight with respect to 100 parts by weight of a binder of the coating composition. When the slip agent is included in an amount of less than 0.1 part by weight, the improvement of the tack on a coating surface cannot be secured and, when it is included in an amount of more than 3 parts by weight, the sealing strength cannot be maintained.

Hereinafter, embodiments and comparative examples of the present disclosure will be described. However, the following embodiments are only embodiments of the present disclosure. The present disclosure is not limited to the following embodiments.

### Primer Layer

On an oriented polypropylene film having a thickness of 40µm, 2g to 3g of a water-based primer layer coating composition comprising each of components of preparation examples 1-1 to 1-8 in following table 1 was dropped and applied by using an applicator (YBA-5). Then, the coating composition was dried by using a hot air dryer at 100°C for 2 to 3 minutes to prepare a film on which 3µm of a primer layer is applied. Each of main and additional components in table 1 was added in consideration of its content relative to a binder in the water-based primer layer coating composition.

**Table 1**

| **Preparation Example** | **Main component** | **Additional component** |
|---|---|---|
| 1-1 | 40 parts by weight of olefins | - |
| 1-2 | 30 parts by weight of olefins | - |
| 1-3 | 20 parts by weight of olefins | - |
| 1-4 | 15 parts by weight of olefins + 15 parts by weight of PMMA | - |
| 1-5 | 10 parts by weight of olefins + 15 parts by weight of PMMA | - |
| 1-6 | 30 parts by weight of olefins | 1 part by weight of a crosslinking agent |
| 1-7 | 30 parts by weight of olefins | 3 parts by weight of an inorganic filling agent |
| 1-8 | 15 parts by weight of PMMA | 3 parts by weight of an inorganic filling agent |

### Assessment

**1. Surface Energy:** Surface energy of a film coated with a primer layer was measured at room temperature by using the KRUSS K11.
**2. Water resistance and Solvent resistance:** On a film coated with a primer layer, one drop of DI for verifying water resistance and one drop of EtOH for verifying solvent resistance were dropped and removed after one minute. Then, the surface of the film was observed.
**3. Temperature of Tack Generation:** Two films, each coated with a primer layer, were put such that the primer layers were contact to each other and pressed at a temperature in a range of 80°C to 160°C with 3 Mpa of pressure for 1 second by using the QM930D. Then, thermal deformations of the primer layers depending on temperatures were verified.
**4. Formation of Film:** 1ml of each of primer layer coating compositions, respectively comprising the components of preparation examples 1-1 to 1-8, was applied on an OPP film and natural-dried. Then, the degrees of film formations were verified.

**Table 2**

| **Preparation Example** | **Surface Energy** | **Water Resistance** | **Solvent Resistance** | **Temperature of Tack Generation** | **Formation of Film** |
|---|---|---|---|---|---|
| 1-1 | 41.2 | ○ | X | 80 | ○ |
| 1-2 | 34.8 | ○ | ○ | 90 | ○ |
| 1-3 | 42.6 | X | ○ | 90 | ○ |
| 1-4 | 40.4 | X | X | 120 | Δ |
| 1-5 | 38.5 | ○ | ○ | 150 | X |
| 1-6 | 36.8 | ○ | ○ | 150 | ○ |
| 1-7 | 21.3 | ○ | ○ | 110 | ○ |
| 1-8 | 23.7 | ○ | ○ | 130 | X |

Coating compositions of preparation examples 1-1 to 1-3 are excellent in film formation because they include olefins as a soft acryl polymer. However, since each of them has a low thermal resistance, the tack may be generated when a barrier layer and a sealant layer are coated. Coating compositions of preparation examples 1-4 and 1-5 comprise PMMA, which is a hard acryl polymer, and thus, each has a very low degree of film formation and water resistance. Coating compositions of preparation examples 1-6 and 1-7 include respectively a crosslinking agent and an inorganic filling agent. Both are suitable for being used as a primer layer in all the properties such as thermal resistance, water resistance, film formability, etc. The coating composition of preparation 1-6, in particular, has appropriately maintained surface energy. A coating composition of preparation example 1-8 does not include olefins, but includes PMMA and an organic filling agent. It has a low degree of film formation and low surface energy.

### Barrier Layer

5g of a protein was slowly adde to 86.25g of distilled water while their mixture was being stirred, then sorbitol was added in a ratio with respect to the protein of 1:1 (wt%). A pH of a reactant was adjusted to be 9 by using an alkali additive. Then, the temperature of the reactant was raised to 90°C while the reactant was being stirred at 300 rpm by using a mechanical stirrer and the reactant was heated for 30 minutes. While the mixture was being cooled after the heating has been finished, a silane coupling agent, in which the hydrolysis has been completed, was added to the mixture in a ratio with respect to the protein of 1:1 (wt%). While barrier layer coating compositions, which have been completely cooled, were being stirred, viscosity agents of preparation examples 2-1 to 2-16 in table 3 were respectively added in contents relative to solids of the respective coating compositions.

**Table 3**

| **Preparation Example** | **Type of Viscosity Agent** | **Content of Viscosity Agent** |
|---|---|---|
| 2-1 | Non-ionic urethane-based | 0.3 |
| 2-2 | Non-ionic urethane-based | 0.5 |
| 2-3 | Non-ionic urethane-based | 1.0 |
| 2-4 | Bentonite group | 0.3 |
| 2-5 | Bentonite group | 0.5 |
| 2-6 | Bentonite group | 1.0 |
| 2-7 | Alginate | 0.5 |
| 2-8 | Alginate | 1.0 |
| 2-9 | Xanthan gum | 0.3 |
| 2-10 | Xanthan gum | 0.5 |
| 2-11 | Xanthan gum | 1.0 |
| 2-12 | Guar gum | 0.5 |
| 2-13 | Guar gum | 1.0 |
| 2-14 | Locust bean gum | 0.5 |
| 2-15 | CNF | 1.0 |
| 2-16 | No use of viscosity agent | |

### Assessment

**1. Viscosity:** Viscosities of the coating compositions were measured by using a viscometer (DV-II+Pro of Brookfield) (spindle: No. 03, rpm: 100 rpm) at room temperature (20±5°C ) and room humidity (55±5%).

**Table 4**

| **Preparation Example** | **Viscosity** | | | | | **Property (beginning)** | **Appearance (beginning)** |
|---|---|---|---|---|---|---|---|
| | **beginning** | **1 day** | **3 days** | **1 week** | **2 weeks** | Clear | Clear |
| 2-1 | 33 | 33 | 33 | 34 | 34 | Clear | Clear |
| 2-2 | 33 | 34 | 34 | 34 | 35 | Clear | Clear |
| 2-3 | 34 | 34 | 35 | 34 | 35 | Precipitated | Particle |
| 2-4 | 60 | 62 | 70 | 75 | 77 | Precipitated | Particle |
| 2-5 | 88 | 90 | 90 | 95 | 99 | Precipitated | Particle |
| 2-6 | 160 | 161 | 163 | 170 | 177 | Clear | Clear |
| 2-7 | 120 | 118 | 125 | 131 | 132 | Clear | Clear |
| 2-8 | 170 | 178 | 181 | 186 | 187 | Clear | Clear |
| 2-9 | 69 | 68 | 71 | 69 | 71 | Clear | Haze |
| 2-10 | 92 | 92 | 100 | 101 | 98 | Clear | Haze |
| 2-11 | 99 | 102 | 110 | 110 | 119 | Clear | Haze |
| 2-12 | 80 | 80 | 95 | 162 | 275 | Precipitated | Particle |
| 2-13 | 576 | 612 | 982 | 1000 or higher | 1000 or higher | Precipitated | Particle |
| 2-14 | 78 | 85 | 121 | 385 | 678 | Precipitated | Particle |
| 2-15 | 55 | 57 | 53 | 35 | 27 | Clear | Particle |
| 2-16 | 27 | 28 | 27 | 29 | 27 | - | Clear |

The urethane-based viscosity agent used in preparation examples 2-1 to 2-3 is a viscosity agent to increase viscosity through bonds with polymers. However, since there was no binder to be bonded with the urethane-based viscosity agent in the barrier layer coating compositions, there was no thickening effect.

The viscosity agents used in preparation examples 2-4 to 2-16 are viscosity agents, each to increase viscosity by increasing the volumes of polymers through hydrogen bonds with surrounding water molecules. They have thickening effects when being added to the barrier layer coating composition. Here, when using the viscosity agents of preparation examples 2-4 to 2-6 and 2-13 to 2-15, although there were thickening effects in the coating composition, part of each viscosity agent was gradually precipitated and particles were noticeable in the coating appearances. When using the viscosity agent of preparation example 2-16, the thickening effect was maintained for 3 days. However, after that, the precipitation was rapidly proceeded, and then, the viscosity was rather lowered again. Unlike the above agents, when using the viscosity agents of preparation examples 2-8 to 2-12, the thickening effects were excellent and the viscosities were maintained well for 2 weeks. In particular, when using the viscosity agents of preparation examples 2-8 and 2-9, the coating appearances were also excellent.

### Sealant Layer

On a paper having 56g/m² of a basis weight, about 10g of a water-based sealant layer coating composition comprising each of components of preparation examples 3-1 to 3-8 in following table 5 was dropped and applied in a predetermined amount (7g/m² for a dry amount) by using an applicator (YBA-5). Then, the coating composition was dried by using a hot air dryer at 120°C for 2 to 3 minutes to prepare a paper on which a sealant layer is applied. Each of main and additional components in table 5 was added in consideration of its content relative to a binder in the water-based sealant layer coating composition.

**Table 5**

| **Preparation Example** | **Main component** | **Additional component** |
|---|---|---|
| 3-1 | 20 parts by weight of olefins + 15 parts by weight of PMMA | - |
| 3-2 | 10 parts by weight of olefins + 30 parts by weight of PMMA | - |
| 3-3 | 40 parts by weight of olefins | - |
| 3-4 | 30 parts by weight of olefins | - |
| 3-5 | 40 parts by weight of olefins | 0.5 parts by weight of a slip agent |
| 3-6 | 30 parts by weight of olefins | 0.5 parts by weight of a slip agent |
| 3-7 | 40 parts by weight of olefins | 3 parts by weight of an inorganic filling agent |
| 3-8 | 30 parts by weight of olefins | 3 parts by weight of an inorganic filling agent |

### Assessment

**1. Measurement of Sealing Strength:** Two papers, each coated with a sealant layer, were put such that the sealant layers were contact to each other and pressed at a temperature in a range of 80°C to 160°C with 3 Mpa of pressure for 1 second by using the QM930D. Then, sealing strengths of the sealant layers were measured depending on temperatures (KS M 7137: 2020, Test method for sealed soft package bag)

**Table 6**

| **Preparation Example** | **Water Resistance** | **Maximum Sealing Strength (gf)** | | | | |
|---|---|---|---|---|---|---|
| | | **90°C** | **100°C** | **110°C** | **120°C** | **130°C** |
| 3-1 | ○ | - | 105 | 250 (fractured) | 260 (fractured) | 257 (fractured) |
| 3-2 | ○ | - | - | 147 | 243 (fractured) | 240 (fractured) |
| 3-3 | ○ | 119 | 336 (fractured) | 389 (fractured) | 464 (fractured) | 458 (fractured) |
| 3-4 | ○ | 60 | 216 | 373 (fractured) | 452 (fractured) | 433 (fractured) |
| 3-5 | ○ | - | 120 | 253 (fractured) | 320 (fractured) | 355 (fractured) |
| 3-6 | ○ | - | - | 108 | 268 (fractured) | 320 (fractured) |
| 3-7 | ○ | - | 180 | 373 (fractured) | 450 (fractured) | 425 (fractured) |
| 3-8 | ○ | - | - | - | 388 (fractured) | 410 (fractured) |

Since each of the coating compositions of preparation examples 3-1 and 3-2 comprises PMMA, which is a hard acryl polymer, in addition to olefins, these compositions have a bit high thermal resistance, and thus, their sealing initiation temperatures are relatively high. The coating compositions of preparation examples 3-3 and 3-4 respectively include high contents of olefins and their sealing initiation temperatures are low. For this reason, there is a possibility of tack generation in these coating compositions, however, they have high sealing strengths. The coating compositions of preparation examples 3-5 to 3-8 have high sealing initiation temperatures and show improvement regarding the tack generation possibilities in comparison with the coating compositions of preparation examples 3-3 and 3-4 because they comprise slip agents or inorganic filling agents. They show sealing strengths appropriate for being used as sealant layers.

### Food Package Material

On a paper having 56g/m² of a basis weight, about 10g of a primer layer coating composition comprising each of the components of preparation examples 1-2, 1-5, and 1-6 in table 1 was dropped and applied in a predetermined amount (5g/m² for a dry amount) by using an applicator (YBA-5). Then, the coating composition was dried by using a hot air dryer at 120°C for 2 to 3 minutes to prepare a primer layer. On the primer layer, about 5 to 6g of a barrier layer coating composition comprising the viscosity agent of preparation example 2-8 in table 3 was dropped and applied in a predetermined amount (6g/m² for a dry amount) by using an applicator (YBA-5). Then, the coating composition was dried by using a hot air dryer at 100°C for 2 to 3 minutes to prepare a barrier layer. On the barrier layer, about 10g of a sealant layer coating composition comprising each of the components of preparation examples 3-1, 3-5, and 3-7 in table 5 was dropped and applied in a predetermined amount (7g/m² for a dry amount) by using an applicator (YBA-5). Then, the coating composition was dried by using a hot air dryer at 120°C for 2 to 3 minutes to prepare a sealant layer. As a result, food package materials of embodiments 1 to 9 in following table 7 were prepared, each comprising a primer layer, a barrier layer, and a sealant layer on a paper having 56g/m² of basis weight.

**Table 7**

| **Embodiment** | **Primer Layer** | **Barrier Layer** | **Sealant Layer** |
|---|---|---|---|
| 1 | Preparation Ex. 1-2 | Preparation Ex. 2-8 | Preparation Ex. 3-1 |
| 2 | Preparation Ex. 1-2 | Preparation Ex. 2-8 | Preparation Ex. 3-5 |
| 3 | Preparation Ex. 1-2 | Preparation Ex. 2-8 | Preparation Ex. 3-7 |
| 4 | Preparation Ex. 1-5 | Preparation Ex. 2-8 | Preparation Ex. 3-1 |
| 5 | Preparation Ex. 1-5 | Preparation Ex. 2-8 | Preparation Ex. 3-5 |
| 6 | Preparation Ex. 1-5 | Preparation Ex. 2-8 | Preparation Ex. 3-7 |
| 7 | Preparation Ex. 1-6 | Preparation Ex. 2-8 | Preparation Ex. 3-1 |
| 8 | Preparation Ex. 1-6 | Preparation Ex. 2-8 | Preparation Ex. 3-5 |
| 9 | Preparation Ex. 1-6 | Preparation Ex. 2-8 | Preparation Ex. 3-7 |

### Assessment

**1. Oxygen Transmission Rate (OTR):** Oxygen transmission rates were measured under conditions of 2/22H, 23±1°C of temperature, and RH 0% by using OXTRAN of MOCON according to ASTM D 3985.
**2. Water Vapor Transmission Rate (WVTR):** Water vapor transmission rates were measured at a temperature of 37±1°C by using AQUATRAN of MOCON according to ASTM F 1927.

**Table 8**

| **Embodiment** | **Maximum Sealing Strength** | | | | | **OTR** | **WVTR** |
|---|---|---|---|---|---|---|---|
| | **90°C** | **100°C** | **110°C** | **120°C** | **130°C** | | |
| 1 | Impossible to perform coating | | | | | | |
| 2 | | | | | | | |
| 3 | | | | | | | |
| 4 | - | 105 | 250 (fractured) | 260 (fractured) | 257 (fractured) | 79.12 | 100 or higher |
| 5 | Delamination of coating layer | | | | | 50.44 | 100 or higher |
| 6 | - | - | 373 (fractured) | 420 (fractured) | 425 (fractured) | 42.78 | 7.32 |
| 7 | - | 105 | 250 (fractured) | 260 (fractured) | 257 (fractured) | 36.24 | 100 or higher |
| 8 | Delamination of coating layer | | | | | 0.55 | 100 or higher |
| 9 | - | - | 373 (fractured) | 420 (fractured) | 425 (fractured) | 0.52 | 4.80 |

In a case of using the coating composition of preparation example 1-2 for a primer layer, when drying the coating composition after its coating, the primer layer was melted due to its low thermal resistance, and thus, following processes could not be proceeded. In a case of using the coating composition of preparation example 1-5, the OTRs were high and differences therebetween were large. This is apparently because films of the primer layers were not well formed so that the barrier layers were not uniformly coated. In a case of using the coating composition of preparation example 1-6, the OTRs and the sealing strengths were generally excellent.

In case of using the coating composition of preparation example 3-1 for a sealant layer, the OTRs tended to be high. This is apparently because the sealant layers melt the barrier layers, and thus, appropriate barrier properties were not achieved. In a case of using the coating composition of preparation example 3-5, the barrier layers and the sealant layers were detached from each other so that it was impossible to measure the sealing strengths. In case of using the coating composition of preparation example 3-7, the WVTRs and the sealing strengths were excellent.

To sum up, it can be verified that a food package material of embodiment 4 has a high OTR, one of embodiment 6 has a low WVTR, and one of embodiment 9 is excellent in all the properties.

## Claims

1. A food package material comprising:
a substrate layer;
a primer layer disposed on the substrate layer;
a barrier layer disposed on the primer layer; and
a sealant layer dispose on the barrier layer.

2. The food package material of claim 1, wherein the barrier layer is formed of a coating composition comprising a solvent, an alkali additive, a natural substance, a filling agent, and a viscosity agent.

3. The food package material of claim 2, wherein the viscosity agent comprises at least one selected from a group consisting of bentonite, guar gum, xanthan gum, alginate, locust bean gum, and cellulose nano fiber.

4. The food package material of claim 2, wherein the viscosity agent is included in an amount of 0.1 to 1 parts by weight with respect to 100 parts by weight of solids of the coating composition.

5. The food package material of claim 1, wherein the primer layer is formed of a coating composition comprising one or more olefins with C3 to C30, one or more olefins with C3 to C30 and a crosslinking agent, or one or more olefins with C3 to C30 and an inorganic filling agent.

6. The food package material of claim 1, wherein the sealant layer is formed of a coating composition comprising one or more olefins with C3 to C30, one or more olefins with C3 to C30 and a slip agent, or one or more olefins with C3 to C30 and an inorganic filling agent.

7. The food package material of claim 5 or claim 6, wherein the olefins are included in an amount of 10 to 40 parts by weight with respect to 100 parts by weight of a binder of the coating composition.

8. The food package material of claim 5 or claim 6, wherein the inorganic filling agent comprises at least one selected from a group consisting of silica gel, calcium carbonate, titanium oxide, montmorillonite, and talc.

9. The food package material of claim 5, wherein the crosslinking agent comprises an isocyanate-based crosslinking agent, an aziridine-based crosslinking agent, a melamine-based crosslinking agent, a carbodiimide-based crosslinking agent, or a reactive vinyl-based crosslinking agent.

10. The food package material of claim 6, wherein the slip agent comprises at least one selected from a group consisting of a carnauba wax emulsion, an ozokerite emulsion, a paraffin wax emulsion, a polyethylene wax emulsion, an oxidized wax emulsion, a silicon emulsion, aliphatic alcohol, a stearic acid monomer, and stearic acid.
